# FASCICULE DE BREVET EUROPEEN

(11) **EP 3 132 375 B1**
(45) Date de publication et mention de la délivrance du brevet: **23.09.2020**
(21) Numéro de dépôt: 15716534.1
(22) Date de dépôt: 16.04.2015
(51) Int. Cl.: G06F 21/53, G06F 21/57

(54) **SYSTEME D'EXECUTION DE CODE AVEC MECANISME D'HYPERVISION EN AVEUGLE**
SYSTEM ZUR AUSFÜHRUNG EINES CODES MIT BLINDEM HYPERVISIONSMECHANISMUS
SYSTEM FOR EXECUTING CODE WITH BLIND HYPERVISION MECHANISM

(30) Priorité: 16.04.2014 FR 1453420
(43) Date de publication de la demande: 22.02.2017
(73) Titulaire: Commissariat à l'Énergie Atomique et aux Énergies Alternatives, 75015 Paris (FR)
(72) Inventeur: DORE, Philippe, F-78180 Montigny-le-Bretonneux (FR); OHAYON, Emmanuel, F-75014 Paris (FR); SIRDEY, Renaud, F-78720 Cernay-la-Ville (FR)
(74) Mandataire: Hnich-Gasri, Naïma
(86) Numéro de dépôt international: PCT/EP2015/058263
(87) Numéro de publication internationale: WO 2015/158821

(56) Documents cités:
- EP-A1- 1 681 630
- WO-A1-2012/148324

## Description

L'invention concerne un système d'exécution de code avec mécanisme d'hypervision en aveugle et s'applique au domaine de la sécurité informatique.

Les travaux portant sur des architectures matérielles pour la sécurité sont nombreux, les plus anciens datant d'environ 15 ans. De nombreuses approches existent, avec différents objectifs de sécurité. Une majorité d'entre elles s'appuient sur une aide matérielle sous la forme d'un coprocesseur cryptographique ou d'un processeur virtuel complet garantissant son isolation du reste du monde, comme dans le cas de la technologie TrustZone de la société ARM™.

Une autre solution appartenant à l'état de la technique est l'architecture matérielle XOM (eXecute-Only Memory) décrite notamment dans l'article de D. Lie, C. Thekkath, M. Mitchell, P. Lincoln, D. Boneh, J. Mitchell, et M. Horowitz intitulé "Architectural Support for Copy and Tamper Resistant Software," SIGPLAN Not., vol. 35, no. 11, pp. 168-177, Nov. 2000. Cette technique offre des garanties de confidentialité en permettant d'exécuter en aveugle du code applicatif, y compris éventuellement une machine virtuelle complète. Le code et les données sont stockés sous forme chiffrée en mémoire, et sont chiffrés/déchiffrés à la volée au sein même du processeur. Une autre solution existante est l'architecture AEGIS décrite dans l'article de G. E. Suh, D. Clarke, B. Gassend, M. van Dijk, et S. Devadas intitulé "AEGIS: Architecture for Tamper-evident and Tamper-resistant Processing," in Proceedings of the 17th Annual International Conference on Supercomputing, New York, NY, USA, 2003, pp. 160-171. Cette architecture s'appuie sur les mêmes principes mais considère un modèle de menace encore plus sévère.

Il existe cependant le besoin de trouver une alternative à ces solutions pour obtenir des performances supérieures avec un coût matériel moins élevé.

Un des buts de l'invention est remédier à des insuffisances/inconvénients de l'état de la technique et/ou d'y apporter des améliorations.

Les revendications définissent l'invention.

D'autres caractéristiques et avantages de l'invention apparaîtront à l'aide de la description qui suit donnée à titre illustratif et non limitatif, faite en regard des dessins annexés parmi lesquels :
- la figure 1 donne un exemple de système distribué utilisant la virtualisation en aveugle ;
- la figure 2 donne un exemple de système d'exécution de code selon l'invention ;
- la figure 3 illustre schématiquement les différents modes de fonctionnement d'un processeur du système d'exécution de code selon l'invention ;
- la figure 4 donne un exemple d'automate à trois états sur lequel apparaissent les opérations possibles pouvant être mises en œuvre sur une partition via le chargeur de machine virtuelle ;
- la figure 5 illustre un exemple de protocole de chargement, entre le maître de virtualisation (Virtualization Master) et un BHH.

Un des objectifs de la présente invention est de garantir la confidentialité et l'intégrité du contenu de la mémoire utilisée dans une plateforme d'exécution de code lorsque des machines virtuelles sont mises en œuvre. Il est ainsi possible de se prémunir contre les attaques de type élévation de privilège. Autrement dit, un logiciel malicieux qui réussirait à s'exécuter avec les droits de l'hyperviseur en exploitant par exemple une faille de sécurité est en pratique dans l'incapacité de récupérer ou modifier des codes et/ou données des machines virtualisées du fait de la mise en œuvre de l'invention. Cela est garanti entre autre par l'ajout d'éléments matériels dans le système.

Avec la mise en œuvre de l'invention, seule une attaque physique mise en œuvre par exemple à l'aide d'une sonde permettrait de mettre en défaut la sécurité du système. Ainsi, l'un des avantages déterminants de l'invention est de pouvoir garantir que la virtualisation de machines n'apporte pas de vulnérabilité supplémentaire à celles qui pouvaient être initialement présentes dans les machines virtualisées.

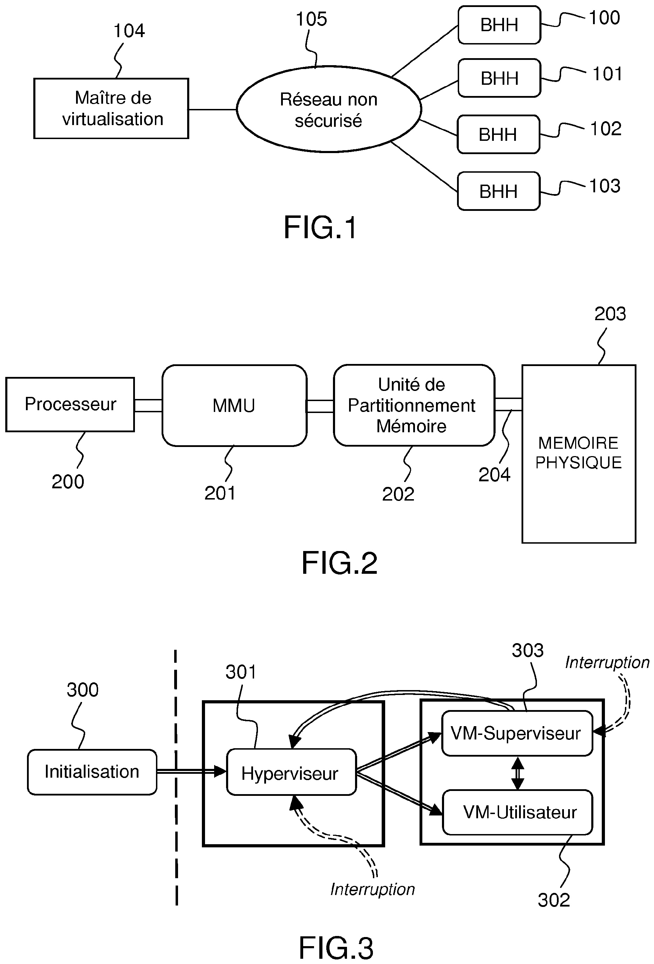

La **figure** 1 donne un exemple de système permettant la virtualisation en aveugle.

Un des objectifs de l'invention est de garantir la confidentialité et l'intégrité des codes et données d'une ou plusieurs machines virtuelles s'exécutant sur une plateforme de virtualisation.
Le système selon l'invention met en œuvre un ensemble de techniques permettant de se protéger de menaces pouvant être décrites à l'aide du modèle suivant :
- la menace est purement logicielle ;
- la finalité de l'attaque est de lire ou modifier les codes et/ou données de la partition d'une machine virtuelle du système ;
- à cette fin, l'attaquant tente d'exploiter une faille du système de virtualisation, en s'octroyant les droits de l'hyperviseur ou en visant à l'exploitation de code malveillant présent dans l'hyperviseur ;
- l'attaque provient donc a priori d'une machine virtuelle exécutée par le système ; toutefois la présente invention permet de façon générale de se prémunir contre une attaque issue de code malicieux s'exécutant dans l'hyperviseur.

L'architecture de virtualisation **(****figure 1****)** s'appuie sur un réseau constitué de machines hôtes 100-103 ou BHH (Blind Hypervision Host) chargées d'exécuter des machines virtuelles. Elle s'appuie ainsi sur une ou plusieurs machines appelées maîtres de Virtualisation (Virtualization Master) 104 ayant un rôle de chef d'orchestre et d'autorité d'authentification. Le réseau 105 reliant ces machines n'est pas considéré comme sûr.

Le maître de virtualisation 104 est responsable de la répartition de charge (load balancing) entre les différentes machines hôtes BHH 100-103 et supervise la migration de machines virtuelles d'une machine BHH 100-103 à l'autre. C'est également lui qui émet pour la première fois une machine virtuelle vers une machine BHH 100-103 lorsqu'elle est introduite dans le système. Enfin, il agit comme une autorité d'authentification auprès des différentes machines BHH 100-103 afin de sécuriser les échanges d'images de machines virtuelles. Il est à noter que les fonctions du maître de virtualisation peuvent être remplies par une machine serveur de type grand public sans nécessiter de matériel particulier.

Les machines hôtes BHH 100-103 exécutent un hyperviseur et reçoivent depuis le réseau des images chiffrées de machines virtuelles à exécuter. Elles peuvent également recevoir des ordres de migration du maître de virtualisation 104 et ainsi échanger des images de machines virtuelles entre elles. Les machines BHH nécessitent des composants matériels spécifiques afin d'implémenter l'hypervision en aveugle. Ces composants seront décrits en détail par la suite.

Chaque machine virtuelle est chiffrée à l'aide d'une clé symétrique qui lui est propre, choisie et conservée par le maître de virtualisation 104. Celui-ci devra donc communiquer la clé de chiffrement à une machine BHH 100-103 avant qu'il ne puisse exécuter la machine virtuelle, selon un protocole d'échange de clé dont un exemple est donné plus loin dans cette description.

A des fins d'authentification et d'échange de clés de chiffrement, chaque machine BHH 100-103 dispose d'une paire de clés cryptographiques privée/publique unique. La clé privée est stockée dans la machine BHH 100-103 par exemple dans un registre en lecture seule, mais celle-ci n'est accessible par le processeur que sous certaines conditions. Dans un mode de réalisation, elle ne peut être utilisée que par un composant de la machine BHH 100-103 appelé chargeur de machine virtuelle (VM Loader) dont le rôle est précisément de charger la machine virtuelle déchiffrée en mémoire en vue de son exécution. Le chargeur de machine virtuelle (VM Loader) est également capable de l'opération inverse, c'est-à-dire de chiffrer une image mémoire d'une machine virtuelle afin de l'envoyer par le réseau à une autre machine, sur ordre du maître de virtualisation (Virtualization Master). Le chargeur de machine virtuelle (VM Loader) d'une machine BHH 100-103 peut être implémenté en logiciel et/ou matériellement, par exemple sous forme de code de confiance stocké en mémoire ou entièrement implémenté par un DMA (Direct Memory Access).

Le VM Monitor (ou hyperviseur) s'exécute sur la machine BHH dans un mode hyperviseur du processeur, lequel paradoxalement lui donne peu de droits. Ceci va à l'encontre des architectures de processeurs classiques pour lesquelles le mode hyperviseur est traditionnellement le plus permissif. Un tel mode permet notamment un accès complet aux registres MPU (Memory Protection Unit) / MMU (Memory Management Unit) et aux entrées/sorties (I/Os).

Dans le cadre de l'invention en particulier, lorsque le processeur fonctionne en mode hyperviseur, il est impossible de lire ou d'écrire dans l'espace mémoire alloué aux machines virtuelles. Pour cela, une Unité de Partitionnement Mémoire est utilisée. L'accès à une partition mémoire allouée à une machine virtuelle donnée est autorisé uniquement lorsque cette même machine virtuelle s'exécute. Dans un mode de réalisation et quand le processeur fonctionne en mode hyperviseur, l'accès à la mémoire est également possible lorsque le chargeur de machine virtuelle (VM Loader) s'exécute.
L'hyperviseur quant à lui peut exécuter ses algorithmes d'ordonnancement et rendre d'éventuels services à ses machines virtuelles sans pouvoir accéder à leur mémoire, et sans pouvoir s'octroyer de droit d'accès sur celles-ci. Cette isolation de l'hyperviseur est un aspect essentiel permettant de se prémunir contre les attaques de type élévation de privilège.

En mode de fonctionnement nominal, la mémoire est donc partitionnée en différentes zones, et dont les limites sont figées. Ces zones correspondent à :
- une partition dédiée à l'hyperviseur, l'Unité de Partitionnement Mémoire UPM assurant que cette partition est la seule accessible lorsque le processeur fonctionne en mode hyperviseur ;
- N≥1 partitions dédiées aux machines virtuelles, chacune pouvant héberger une seule machine, l'Unité de Partitionnement Mémoire UPM assurant que chacune de ces partitions n'est accessible qu'en mode utilisateur ou superviseur de la machine virtuelle correspondante, ou par le chargeur de machine virtuelle (VM Loader) lors du chargement/déchargement de la machine virtuelle ;
- de manière optionnelle, une partition en lecture seule et non modifiable pour le code du chargeur de machine virtuelle (VM Loader).

Dans un mode de réalisation préféré, les limites de ces partitions sont fixées à l'initialisation du processeur.

En résumé, les propriétés de sécurité du système selon l'invention s'appuient sur un ensemble de mécanismes matériels et/ou logiciels détaillés ci-après :
- une Unité de Partitionnement Mémoire UPM assurant matériellement l'isolation mémoire entre les différentes partitions ;
- un processeur présentant différentes caractéristiques pour la sécurité telles que :
   ∘ quatre modes de fonctionnement : Initialisation, Hyperviseur, Superviseur et Utilisateur, avec des privilèges spécifiques associés ;
   ∘ des macro-instructions permettant la transition d'un mode vers l'autre, accompagné éventuellement d'un changement simultané de partition dans l'Unité de Partitionnement Mémoire UPM ;
   ∘ en particulier, une macro-instruction spécifique permettant de sauvegarder les registres du processeur en mémoire avant de le faire basculer en mode hyperviseur (similaire dans l'esprit aux instructions *INT* ou *SYSENTER* des processeurs Intel™), tandis que l'Unité de Partitionnement Mémoire UPM bascule simultanément vers la partition dédiée à l'hyperviseur ;
- un chargeur de machine virtuelle (VM Loader) peut être également utilisé pour effectuer des transferts :
   ∘ depuis l'interface réseau vers la mémoire avec déchiffrement des données à la volée ;
   ∘ depuis la mémoire vers l'interface réseau avec chiffrement à la volée.

La **figure 2** donne un exemple de système d'exécution de code selon l'invention.

Le système d'exécution de code avec mécanisme d'hypervision en aveugle comprend :
- au moins une mémoire physique adressable 203 ;
- un processeur 200 fonctionnant dans au moins deux modes, un mode dit d'initialisation permettant de définir au moins une partition dans la mémoire et au moins un deuxième mode dit nominal ;
- un bus mémoire 204 reliant le processeur à la mémoire ;
- une unité de partitionnement mémoire 202 positionnée sur le bus mémoire 204, ladite unité étant adaptée pour restreindre l'accès mémoire à la partition en cours d'exécution lors que le processeur 200 est dans un autre mode que le mode d'initialisation.

Selon un aspect essentiel de l'invention, un dispositif matériel dédié assure l'isolation mémoire entre les différentes partitions. Contrairement à une MMU/MPU classique, ce dispositif ne peut être programmé que lorsque le processeur fonctionne en mode Initialisation. Cela signifie que ni l'hyperviseur, ni une machine virtuelle ne pourront accéder en lecture ou en écriture à ses registres et tables.

Ce dispositif est adapté pour permettre de définir la taille et le nombre de partitions en mémoire ainsi que les éventuels canaux de communication entre les machines virtuelles et l'hyperviseur. Elle est capable en particulier de vérifier que :
- en fonctionnement nominal (c'est-à-dire hors mode Initialisation), une et une seule partition est accessible : celle de l'hyperviseur si le processeur s'exécute en mode Hyperviseur, ou celle de la machine virtuelle en cours d'exécution. Les droits d'accès supplémentaires classiques s'appliquent alors uniquement à la partition en cours, tandis que les autres partitions sont inaccessibles ;
- la sélection de la partition appropriée est faite automatiquement lorsque le processeur passe du mode hyperviseur vers une machine virtuelle ou inversement.
Les partitions devront être a priori disjointes et recouvrir l'ensemble de la mémoire du système. Néanmoins, ce dispositif pourra permettre de définir certaines zones communes à plusieurs partitions, comme par exemple pour l'accès à des registres d'entrées/sorties sur des périphériques partagés entre plusieurs machines virtuelles, ou encore des buffers de communication entre une machine virtuelle (VM) et l'hyperviseur.
L'unité de partitionnement mémoire UPM peut s'ajouter à un mécanisme de protection/translation d'adresse (MPU/MMU) classique effectif au sein de la partition, et modifiable par le système d'exploitation de la partition (ou l'hyperviseur dans le cas de la partition hyperviseur).

Dans un mode de réalisation alternatif, une unité de translation d'adresse est adjointe au système. Cette unité définit uniquement les partitions, en amont d'une MMU « classique » sur le bus mémoire. Cette unité de translation peut se limiter à un mécanisme de type segmentation comme sur x86 [R11], c'est-à-dire permettre de définir des segments mémoire par un offset et une taille, chaque segment correspondant à une partition. La figure 2 donne une illustration de ce type d'implémentation. En fonctionnement nominal, lorsque le processeur exécutant une VM accède à un mot mémoire, celui-ci il émet sur le bus une adresse virtuelle dans la partition active. La MMU, généralement configurée par le système d'exploitation (OS) de la machine virtuelle (VM), transforme cette adresse virtuelle en une adresse réelle au sein de la partition. Puis, l'unité de partitionnement mémoire UPM convertit cette adresse réelle en une adresse physique de la machine hôte.

L'unité de partitionnement mémoire UPM peut être préconfigurée de manière statique à la conception du CPU ou être a minima paramétrable en mode initialisation :
- taille de la partition dédiée à l'hyperviseur ;
- taille des partitions pouvant accueillir une machine virtuelle (VM) ;
- le nombre de partitions affectées aux machines virtuelles peut se déduire des deux paramètres ci-dessus.
Des extensions peuvent être conçues pour permettre à l'hyperviseur de modifier dynamiquement (hors mode initialisation) la taille ou le nombre de partitions, à condition que les codes et données de celles-ci restent toujours inaccessibles à l'hyperviseur ou aux autres partitions.

Dans un mode de réalisation, le processeur peut implémenter quatre niveaux d'exécution:
- mode initialisation ;
- mode hyperviseur ;
- mode VM-superviseur ;
- mode VM-utilisateur.

Les modes hyperviseur, VM-superviseur et VM-utilisateur sont relativement semblables à ceux rencontrés sur les architectures proposant une aide matérielle à la virtualisation. Ils ont notamment une priorité décroissante au sens des interruptions. Par exemple en mode VM-superviseur, le processeur peut voir son exécution interrompue pour basculer en mode hyperviseur, soit via une interruption, soit via une instruction dédiée.

La **figure 3** illustre schématiquement les différents modes de fonctionnement d'un processeur du système d'exécution de code selon l'invention.

Le mode initialisation 300 est le mode de démarrage par défaut du processeur. Il lui permet d'accéder en lecture/écriture à tout le contenu de la mémoire, ainsi qu'aux registres de configuration de l'unité de partitionnement mémoire, mais les fonctionnalités du chargeur de machine virtuelle (VM Loader) ne lui sont pas accessibles. Ce mode existe pour permettre l'initialisation du système et de ses périphériques d'entrée/sortie. Il est possible d'inclure, dans la configuration du système la configuration du partitionnement de la mémoire. Le processeur peut être utilisé de manière classique en restant dans ce mode. Néanmoins les fonctionnalités liées à la virtualisation sécurisée ne seront pas accessibles.

Il est possible après initialisation de basculer vers le mode hyperviseur grâce à une instruction dédiée *LAUNCHHV* du processeur. Ce basculement active les mécanismes de sécurité et est irréversible. L'instruction *LAUNCHHV*, disponible uniquement dans le mode Initialisation réalise les opérations suivantes :
- vidage et invalidation des mémoires caches d'instructions de données ;
- remise à zéro du contexte processeur (registres généraux, d'états, ...) ;
- activation du partitionnement mémoire ;
- basculement de l'unité de partitionnement mémoire pour que la mémoire visible soit celle de la partition contenant l'hyperviseur ;
- basculement du processeur en mode hyperviseur ;
- chargement du pointeur d'instruction au choix des options d'architecture choisies (les deux options ne sont pas exclusives):
   ∘ avec l'adresse suivant immédiatement l'instruction *LAUNCHHV* (continuer le flot d'exécution lors de la transition initialisation vers hyperviseur du processeur signifie que le code d'initialisation de la plateforme réside dans la zone mémoire correspondant à la partition de l'hyperviseur et que le basculement n'affecte pas la translation d'adresse pour cette partition) ;
   ∘ avec une adresse fixe dans la partition de l'hyperviseur, correspondant à son point d'entrée (L'adresse du point d'entrée de l'hyperviseur correspondant à son activation lors de la transition initialisation vers hyperviseur du processeur peut être chargée de manière indirecte via la lecture de celle-ci à une adresse fixe et connue de sa partition).
- lors de cette transition et en fonction de l'implémentation choisie les partitions dédiées à l'accueil de machines virtuelles seront :
   ∘ effacées et marquées comme libres ;
   ∘ et/ou simplement marquées comme libre et non effacées.

Dans la seconde hypothèse, l'appel à la primitive *vmlNewContext ()* devra procéder à l'effacement de la partition sélectionnée.

Il est à noter que le seul moyen de revenir au mode Initialisation après avoir exécuté l'instruction *LAUNCHHV*, et ainsi de récupérer les pleins pouvoirs sur la machine est une réinitialisation (*RESET*) du processeur, qui entraînera une remise à zéro des registres et de la mémoire. Ce mécanisme permettra de garantir la confidentialité des données chargées par le chargeur de machine virtuelle (VM Loader) en mémoire.

Le mode hyperviseur 301 est le mode dans lequel doit s'exécuter l'hyperviseur. Il s'agit d'un mode d'exécution du processeur à part entière. Selon l'invention, il est impossible dans ce mode d'accéder directement aux partitions des machines virtuelles, en lecture comme en écriture. La manipulation de ces partitions s'effectue par l'intermédiaire du chargeur de machine virtuelle (VM Loader), dont l'API est alors accessible. Des extensions peuvent être envisagées pour permettre de redimensionner les partitions mémoires des machines virtuelles depuis le mode hyperviseur, toujours à la condition que celui-ci ne puisse jamais accéder à la mémoire.

Depuis le mode hyperviseur, il est possible de lancer l'exécution d'une machine virtuelle (VM) via une instruction spécifique *LAUNCHVM*, prenant en paramètre l'identifiant de la partition contenant la machine virtuelle (VM) à exécuter. Dans le principe, cette macro-instruction est similaire à un « retour d'interruption » ou « retour d'appel système » (e.g. *SYSEXIT* ou *IRET* sur processeurs x86), dans la mesure où elle permet simultanément notamment de changer de contexte mémoire, de restaurer l'ensemble des registres d'état correspondant à la machine virtuelle (VM), et de faire basculer le processeur en mode VM-Superviseur ou VM-Utilisateur, selon l'état de la machine virtuelle (VM) restaurée.

Le mode VM-superviseur 303 correspond au mode superviseur traditionnel de n'importe quel processeur sous hypervision. C'est généralement le mode d'exécution utilisé pour exécuter le code du noyau des machines virtuelles. Il devrait permettre par exemple au système d'exploitation (OS) invité de la machine virtuelle (VM) d'exécuter des instructions privilégiées telles que le masquage de ses interruptions, ou la modification de son espace d'adressage au sein de sa partition (accès MMU). Néanmoins, il doit rester matériellement impossible pour le code s'exécutant à ce niveau d'accéder à la partition de l'hyperviseur, ou à celle d'autres machines virtuelles, grâce à l'unité de partitionnement mémoire.

Le mode VM-Utilisateur 302 correspond au mode utilisateur traditionnel de n'importe quel processeur. Ils constituent avec le mode VM-superviseur les deux modes processeur disponibles pour une machine virtuelle. Le basculement entre ces deux modes n'est pas obligatoire et relève de la responsabilité du logiciel système et la machine virtuelle. Ces changements de modes s'opèrent à l'intérieur de la partition de la machine virtuelle (VM) concernée et n'ont aucune incidence sur la sécurité.

L'initialisation ou la réinitialisation du processeur (RESET) est une opération délicate car il s'agit de l'unique méthode permettant au processeur de basculer en mode initialisation. Cela signifie simplement que les opérations de RESET partiel sont proscrites. Si le processeur intègre des moyens logiciels de réinitialisation de la machine, ils devraient respecter les recommandations suivantes :
- mode VM-Utilisateur : ce type d'instruction n'est pas disponible dans ce mode ;
- mode VM-Superviseur : une telle instruction devrait simplement redémarrer la machine virtuelle en affectant au pointeur d'instruction l'adresse de son point d'entrée ;
- mode Hyperviseur : l'exécution d'une telle instruction doit se comporter de manière identique à l'assertion de la broche RESET du processeur à savoir :
   ∘ effacement de l'intégralité de la mémoire de type RAM ;
   ∘ invalidation des caches donnée et instruction ;
   ∘ remise à zéro du contexte processeur (registres généraux, d'états, ...) ;
   ∘ désactivation de toutes les protections mémoire et effacement des tables MPU/MMU (incluant la configuration de l'Unité de Partitionnement Mémoire) ;
   ∘ RESET de l'ensemble des dispositifs d'entrée/sortie ;
   ∘ basculement du processeur en mode Initialisation, rendant ainsi le chargeur de machine virtuelle (VM Loader) inaccessible ;
   ∘ chargement du pointeur d'instruction avec l'adresse du vecteur RESET.
- Mode Initialisation : la mémoire ne renferme alors aucune donnée sensible en clair, aussi il est possible de procéder à un RESET « simplifié », par exemple sans remettre à zéro le contenu de la RAM. L'application des mêmes mécanismes que lors d'un RESET depuis le mode Hyperviseur est évidemment suffisant.

Il n'est fait aucune hypothèse particulière sur le VM Monitor (hyperviseur) : ce peut être a priori n'importe quel hyperviseur, à condition de le modifier pour pouvoir se plier à la protection mémoire imposée par l'Unité de Partitionnement Mémoire. En particulier, rappelons que l'hyperviseur ne peut accéder directement ni en lecture ni en écriture à la mémoire des machines virtuelles.

Les éventuels besoins de communication entre les machines virtuelles et l'hyperviseur pourront être assurés par des canaux de mémoire partagés isolés et dédiés, clairement identifiés dans l'unité de partitionnement mémoire pendant la phase d'Initialisation.

Le chargeur de machine virtuelle (VM Loader) est un service appelé par l'hyperviseur, et dont le rôle est de faire des transferts de données vers (respectivement depuis) la partition mémoire d'une VM avec déchiffrement (respectivement chiffrement) à la volée. Il est à rappeler que ces zones sont inaccessibles en lecture comme en écriture depuis le mode hyperviseur.

Le chargeur de machine virtuelle (VM Loader) est la seule entité ayant accès à la clé privée du BHH. Il est donc le seul capable de s'authentifier auprès du maître de virtualisation 104, et de recevoir de celui-ci des données confidentielles à l'aide de cette même clé.

Le chargeur de machine virtuelle (VM Loader) peut au choix être implémenté matériellement, sous la forme d'un DMA (Direct Memory Access) par exemple et/ou de manière logicielle.

Ce dispositif fournit en mode hyperviseur une API (Application Programming Interface) dont un exemple de base est décrit ci-après.

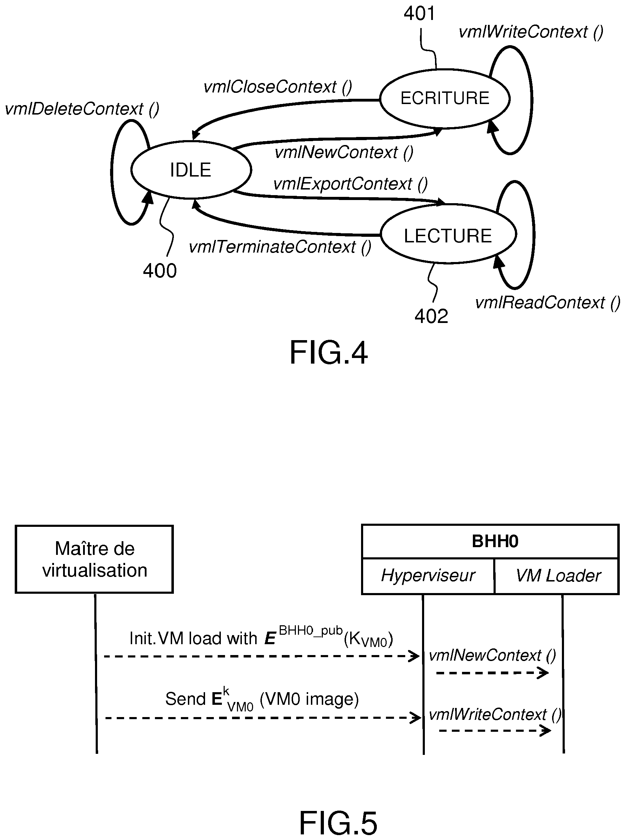

La **figure 4** donne un exemple d'automate à trois états sur lequel apparaissent les opérations possibles pouvant être mises en œuvre sur une partition via le chargeur de machine virtuelle (VM Loader).

Lorsque le chargeur de machine virtuelle (VM Loader) est dans un état autre que *IDLE* 400 pour une partition donnée, celle-ci ne peut pas être exécutée. C'est le cas dans les modes d'écriture WRITE 401 et de lecture READ 402. Autrement, l'exécution d'une instruction *LAUNCHVM* lèverait une exception récupérée par l'hyperviseur.

Des exemples de primitives sont donnés ci-après.

### Exemple de primitive : vmINewContext()

### Syntaxe : vmlNewContext (cipherKey)

Cette primitive renvoie un identifiant de partition mémoire libre dans laquelle une machine virtuelle (VM) peut être chargée. Cette partition est intégralement remise à zéro par le chargeur de machine virtuelle (VM Loader) lors de l'appel. L'appel échoue si toutes les partitions sont utilisées. Le paramètre *cipherKey* correspond à la clé de chiffrement de la machine virtuelle (VM) qui s'apprête à être chargée, elle-même chiffrée à l'aide de la clé publique du chargeur de machine virtuelle (VM Loader) (donc indéchiffrable typiquement par l'hyperviseur). Le chargeur de machine virtuelle (VM Loader) déchiffre puis charge cette clé dans un *registre de clé de machine virtuelle (VM)* qui lui est propre, et qui est inaccessible par le reste de la machine ; elle sera utilisée pour le chiffrement/déchiffrement à la volée de cette partition lors des opérations *vmlWriteContext ()* et/ou *vmlReadContext ()*. Il est à noter qu'il doit exister un registre de clé de VM par partition.

Dans une implémentation où l'ensemble des partitions dédiées à l'exécution d'une machine virtuelle (VM) sont de taille identique, cette primitive ne nécessite pas de paramètre supplémentaire. Elle pourrait cependant être facilement généralisée en acceptant en entrée la taille de partition souhaitée. À des fins de performance l'état des partitions (effacée ou non) pourrait être stocké dans un registre du chargeur de machine virtuelle (VM Loader) accessible uniquement par ce dernier.

### Exemple de primitive : vmlWriteContext()

### Syntaxe : vmlWriteContext (id, data, size)

Cette primitive déchiffre et écrit dans la partition mémoire identifiée par *id,* le bloc de données chiffré *data* de taille *size.* L'identifiant de partition mémoire aura été obtenu au préalable en utilisant la primitive *vmlNewContext ()*. Le déchiffrement se fait à l'aide de la clé symétrique qui a été passée lors de l'appel à *vmlNewContext ()*.

Le comportement de cette primitive est similaire à la sémantique du *write ()* POSIX : chaque appel à *vmlWriteContext ()* écrit des blocs adjacents dans la partition jusqu'à ce qu'elle soit pleine, auquel cas l'appel à cette primitive échoue.

### Exemple de primitive : vmlCloseContext()

### Syntaxe : vmlCloseContext (id, CRC)

Cette primitive signale la fin de l'écriture d'une partition, et procède à une vérification des données écrites dans la partition avec un code de détection d'erreur de type CRC. La vérification s'effectue sur les données déchiffrées. La vérification porte sur l'intégralité de la partition permettant ainsi de se prémunir contre le rejeu (écrire des morceaux de différentes machines virtuelles).

Après l'appel à cette primitive il devient impossible d'ajouter de nouvelles données via un appel à *vmlWriteContext: ()*. La partition devra être libérée grâce à la primitive *vmlDeleteContext ()*.

En cas d'échec de la vérification, la primitive retourne un code d'erreur. Dès lors :
- la machine virtuelle (VM) erronée ne peut être exécutée ;
- la partition ne peut être complétée par d'autre appels à la *vmlWriteContext ()* ;
- la primitive *vmlCloseContext ()* ne peut être appelée à nouveau avec un *CRC* différent ;
- la primitive *vmlDeleteContext ()* devra être utilisée afin de libérer et effacer la partition.

### Exemple de primitive : vmlExportContext()

### Syntaxe : vmlExportContext (id, destIdentity)

Cette primitive permet d'initier un transfert de la machine virtuelle en vue de sa migration.

Le paramètre *destIdentity* est fourni par le maître de virtualisation (Virtualization Master) et indique au chargeur de machine virtuelle (VM Loader) à quel BHH il doit envoyer l'image de la machine virtuelle (VM) chiffrée.

### Exemple de primitive : vmlReadContext()

### Syntaxe : vmlReadContext (id, data, size)

Cette primitive lit dans la partition mémoire identifiée par *id*, le bloc *chunk* de données data de taille *size.* Cette partition mémoire aura été au préalable chargée avec la machine virtuelle ciblée par la migration.

Le comportement de cette primitive est similaire à la sémantique du *read ()* POSIX : chaque appel à vml*ReadContext ()* lit des blocs successivement adjacents dans la partition, jusqu'à ce qu'elle soit lue dans son intégralité, auquel cas l'appel à cette primitive échoue.

Les données ainsi récupérées de la partition sont chiffrées à la volée en utilisant la clé de chiffrement de la machine virtuelle (VM) obtenue lors de l'appel à *vmlNewContext ()* et stockée jusqu'alors dans un registre interne au chargeur de machine virtuelle (VM Loader). Le chargeur de machine virtuelle (VM Loader) destinataire ne sera en mesure de déchiffrer l'image ainsi envoyée que si le maître de virtualisation (Virtualization Master) lui a préalablement fait également parvenir la clé de chiffrement associée à la machine virtuelle (VM), via un appel *vmlNewContext ()*.

### Exemple de primitive : vmlTerminateContext()

### Syntaxe : vmlTerminateContext (id, crc)

Cette primitive signale la fin de l'exportation d'une partition, et procède à la génération et l'émission du code de vérification d'intégrité de type *CRC.* Ce code porte sur l'intégralité des données déchiffrées contenus dans la partition données.

Après l'appel à cette primitive, la mémoire de la partition est intégralement effacée et pourra à nouveau être allouée, de façon similaire à un appel *vmlDeleteContext ()*.

### Exemple de primitive : vmlDeleteContext()

### Syntaxe : vmlDeleteContext (id)

Cette primitive libère la partition identifiée par *id.* Le contenu de la mémoire associé est intégralement effacé.

Cette partition pourra, par la suite, être réallouée par l'hyperviseur à l'aide de la primitive *vmlNewContext ()*.

Le chargeur de machine virtuelle (VM Loader) peut être implémenté sous forme logicielle, à la condition que son code et ses données soient protégées de toute interaction avec les autres partitions (y compris l'hyperviseur). Afin d'éviter toute injection de code malveillant, le chargeur de machine virtuelle (VM Loader) peut être chargé en mémoire en utilisant des techniques de type SecureBoot de IUEFI (Unified Extensible Firmware Interface Forum) pour garantir son authenticité.

Par ailleurs, le chargeur de machine virtuelle (VM Loader) devra s'exécuter dans une partition propre, qui lui donnera accès aux partitions des machines virtuelles qu'il charge ou décharge. Il est à noter que cette partition peut prendre plusieurs formes : zone mémoire réservée et protégée en mode de fonctionnement nominal du processeur, machine virtuelle sécurisée de type « TrustZone » ou autre.

L'appel à des fonctions de l'API du chargeur de machine virtuelle (VM Loader) ne peut toujours être fait que par le processeur fonctionnant en mode hyperviseur ; par ailleurs, un appel à l'une de ces fonctions devra désactiver temporairement l'unité de partitionnement mémoire UPM pour permettre l'accès aux autres partitions par le chargeur de machine virtuelle (VM Loader).

Des mécanismes processeurs pouvant être mis en œuvre pour assurer le basculement entre le mode hyperviseur et une machine virtuelle (VM) quelconque sont décrits ici.

### Basculement vers une machine virtuelle (VM)

Le processeur peut disposer d'une instruction dédiée *LAUNCHVM* qui prend en argument l'identifiant de la machine virtuelle (VM) à exécuter, tel que renvoyé par l'appel *vmlNewContext ()*. Cette instruction est disponible uniquement en mode hyperviseur, et renvoie une erreur si elle est exécutée sur une partition qui n'a pas été validée par un appel à *vmlCloseContext ()*.

L'instruction *LAUNCHVM* réalise les opérations suivantes :
- vidage et invalidation des caches instruction et data ;
- remise à zéro du contexte processeur (registres généraux, d'états, ...) ;
- basculement de l'Unité de Partitionnement Mémoire pour que la mémoire visible soit celle de la partition contenant la machine virtuelle (VM) ;
- basculement du processeur en mode VM-Superviseur ;
- chargement du pointeur instruction avec une adresse fixe à l'intérieur de la partition active correspondant à la routine de restauration de contexte. L'adresse de la routine de restauration de contexte peut être chargée de manière indirecte via la lecture de celle-ci à une adresse fixe et connue de la partition active.

Le code de la routine de restauration de contexte est fourni par l'hyperviseur et doit être inclus par la machine virtuelle à l'adresse spécifiée. Son rôle est de restaurer le contexte processeur de la machine virtuelle préalablement préemptée.

Il est à noter que l'altération de ce code par la machine virtuelle n'aura aucune incidence sur le reste du système et ne compromettra en aucun cas la confidentialité des données de ladite machine virtuelle (VM). En outre, les données des autres machines virtuelles et de l'hyperviseur présentes sur la machine hôte ne seront compromises d'aucune manière. En revanche, la VM dont le code de restauration a été altéré peut en toute hypothèse ne plus fonctionner correctement, voire ne plus fonctionner du tout ; mais une telle attaque de type « déni de service » correspond à une faille inhérente à la machine virtuelle (VM) elle-même, dont nous ne prétendons pas nous prémunir par la présente invention.

### Machine virtuelle (VM) qui rend la main

Une machine virtuelle (VM) peut rendre la main au choix via une instruction dédiée *YIELD* (correspondant à ce qui est couramment appelé un « hypercall »), ou sur occurrence d'une interruption non masquable signalant l'expiration d'un timer programmé par l'hyperviseur.

Ces deux situations amènent le même comportement :
- exécution en mode VM-Superviseur d'une procédure de sauvegarde de contexte (registres, état de la machine, ...) « câblée », ou tout du moins stockée de façon inaltérable dans le système ;
- vidage et invalidation des caches instruction et data ;
- remise à zéro du contexte processeur (registres généraux, d'états, ...) ;
- configuration de la MPU pour que la mémoire visible soit celle de la partition contenant l'hyperviseur ;
- basculement du processeur en mode hyperviseur ;
- chargement du pointeur instruction avec une adresse fixe à l'intérieur de la partition hébergeant l'hyperviseur correspondant à un point d'entrée dédié de ce dernier. L'adresse du point d'entrée dédié au retour dans l'hyperviseur peut être chargée de manière indirecte via la lecture de celle-ci à une adresse fixe et connue de la partition destinée à celui-ci.

Il est à noter que le code de la routine de sauvegarde de contexte ne peut résider au sein de la machine virtuelle (VM) elle-même. Il serait alors impossible de garantir que cette routine se termine bien par un basculement vers l'hyperviseur ; dès lors, une attaque de type déni de service affectant l'ensemble du système (et donc les autres machines virtuelles s'exécutant sur celui-ci) pourrait facilement être opérée. Par conséquent, la routine de sauvegarde du contexte de la machine virtuelle (VM) devra être assuré soit par du microcode, soit par du code stocké dans une zone non altérable du processeur, ou par tout autre mécanisme interne au processeur garantissant son inaltérabilité.

### Échanges des machines virtuelles avec l'extérieur

Il est considéré essentiellement des Entrées/Sorties (I/Os) correspondant à du trafic réseau passant par une ou plusieurs interfaces partagées ; mais les principes s'étendent à tous les autres types d'I/Os, comme les écritures sur un disque partagé entre plusieurs machines virtuelles.

De nombreuses implémentations d'hyperviseur nécessitent que les machines virtuelles passent par l'hyperviseur pour leurs opérations d'I/Os, en particulier sur des architectures ne bénéficiant pas d'outils matériels pour la virtualisation des périphériques (IOMMU). L'hypothèse est faite ici que pour toute communication sortant, la sécurité des données (notamment confidentialité, authenticité) doit être garantie par la machine virtuelle dans les couches supérieures du protocole implémenté, quel qu'il soit. Ceci ne constitue pas en soi une faille de sécurité supplémentaire due à la virtualisation, dans la mesure où un hyperviseur compromis épiant les I/Os d'une machine virtuelle (VM) aurait le même pouvoir de nuisance que n'importe quel nœud du réseau de communication par lequel circule l'I/O en question.

Noter que cette précaution est nécessaire même si la machine virtuelle (VM) est autorisée dans le cadre de sa partition à adresser directement des périphériques d'entrée/sortie physique, dès lors que ceux-ci sont partagés avec l'hyperviseur et/ou d'autres machines virtuelles.

### Chargement et Migration de machine virtuelle (VM)

L'introduction d'une nouvelle machine virtuelle dans le système est faite par le maître de virtualisation (Virtualization Master). Celui-ci associe à chaque nouvelle machine virtuelle (VM) une unique clé de chiffrement, qui sera utilisée pour le transit de la machine virtuelle (VM) à travers le réseau. Le maître de virtualisation (Virtualization Master) maintient donc :
- une liste des clés publiques des BHH du réseau ;
- une liste des clés de chiffrement (symétriques) associées à chaque machine virtuelle (VM) exécutée dans le système ;
- Lorsque le maître de virtualisation (Virtualization Master) choisit d'envoyer l'image d'une machine virtuelle (VM) à un BHH pour exécution, il lui envoie dans un premier temps la clé de chiffrement de la machine virtuelle (VM), elle-même chiffrée à l'aide de la clé publique du BHH, de sorte que seul le chargeur de machine virtuelle (VM Loader) soit en mesure de la lire, à travers un appel *vmlNewContext ()*. Suit l'image de la machine virtuelle (VM) elle-même, chiffrée avec la clé de chiffrement transmise.

La **figure 5** illustre un exemple de protocole de chargement, entre le maître de virtualisation (Virtualization Master) et un BHH.

La fonction *E* est une fonction de chiffrement quelconque ; l'expression *E*^{K}(X) correspond au chiffré de X en utilisant la clé K. BHH0_pub est la clé publique du chargeur de machine virtuelle (VM Loader) de BHH0, et K_{VM0} est la clé de chiffrement symétrique associée à la VM0. On remarque qu'aucune donnée en clair ne passe entre les mains de l'hyperviseur du BHH0 : tous les déchiffrements sont faits par le chargeur de machine virtuelle (VM Loader), dans des zones inaccessibles à l'hyperviseur.

La migration de machine virtuelle (VM) d'un BHH0 vers un BHH1 suit un protocole similaire : le maître de virtualisation (Virtualization Master) envoie à BHH1 la clé de chiffrement *K_{VM0}* (elle-même chiffrée avec la clé publique *BHH1_pub*) de la machine virtuelle (VM) qu'il doit s'apprêter à recevoir, puis envoie l'ordre au BHH émetteur (BHH0) d'initier la migration. Celui-ci envoie à BHH1 la machine virtuelle (VM) chiffrée en utilisant la clé *K_{VM0}*, conservée jusqu'alors dans un registre de clé de machine virtuelle (VM) du chargeur de machine virtuelle (VM Loader).
Il est à noter que les protocoles décrits ici sont partiels et donnés uniquement à titre d'exemple ; ils peuvent être étendus (avec les fonctionnalités du chargeur de machine virtuelle (VM Loader) notamment pour renforcer l'authentification des BHH par le maître de virtualisation (Virtualization Master), pour s'assurer par exemple qu'une machine malicieuse ne tente pas de faire exécuter de « fausses » machines virtuelles à un BHH du réseau.

Il est important de noter que l'invention peut être appliquée dans des contextes différents que celui de la virtualisation.
Les processeurs de traitement du signal DSPs (Digital Signal processors) ou de façon générale les processeurs spécialisés (utilisés par exemple comme accélérateurs) présents dans le monde de l'embarqué ne disposent pas nécessairement de dispositifs MPU/MMU très évolués. Pour une application donnée, ils réalisent de manière efficace des opérations de calcul intensif telles que du traitement de signal radio, d'image ou de son.
La cohabitation de plusieurs machines virtuelles ainsi que la migration de ces dernières ne sont pas des exigences pour ces types de processeurs. Néanmoins il peut être intéressant d'offrir à ce type de CPU un mécanisme de chargement en aveugle afin de garantir la confidentialité de l'applicatif chargé. Cette possibilité s'inscrit en complément de techniques de type Secure Boot qui garantissent l'authenticité de l'applicatif chargé.
Seul un sous-ensemble des mécanismes décrits dans ce document seront alors requis :
- les primitives *vmlExportContext ()*, *vmlReadContext ()* et *vmlTerminateContext ()* ne sont pas nécessaires ;
- deux partitions sont nécessaires (une pour le chargeur et une pour l'application) ;
- trois modes processeurs sont suffisants (*Initialisation*, *Chargeur* et *Applicatif*; seules les transitions *Initialisation* →*Chargeur*, *Chargeur*→*Applicatif* sont autorisées, en supposant qu'une fois en mode nominal l'applicatif n'a plus besoin d'exécuter à nouveau le code du chargeur. Il pourrait même être envisagé d'autoriser la partition *Applicatif* à récupérer l'espace mémoire de la partition *chargeur.* Il est possible de réduire à deux le nombre de modes processeur pour un DSP si l'on fixe, à sa conception, la taille des deux partitions, que ce mécanisme soit actif au démarrage et que l'application réalise l'initialisation de la plateforme.

Une utilisation typique consisterait à :
- démarrer le processeur en mode Initialisation, initialiser la machine (périphériques, I/O) et préparer les partitions, en chargeant notamment le bootloader dans la zone mémoire correspondant à la partition *chargeur* ;
- exécuter la transition *Initialisation →Chargeur*, activant ainsi l'Unité de Partitionnement Mémoire et basculant le processeur vers la partition *chargeur* ;
- exécuter le code du chargeur, qui s'appuie sur le Chargeur de machine virtuelle (VM Loader) pour charger le code de l'applicatif dans sa partition - le chargeur ne peut donc pas lire le code de l'applicatif qui est chargé en mémoire ;
- exécuter la transition *Chargeur* → *Applicatif*, afin de lancer l'applicatif. La machine restera dans la partition *Applicatif* jusqu'au *RESET.*

Les fonctionnalités du BHH peuvent être implémentées de façon pseudo-distribuée, par exemple sur une puce de type many-cœurs où plusieurs clusters sont reliés par un NoC (Network-on-Chip).
Dans une telle configuration, chaque partition peut être matérialisée par un nœud du réseau, implémentant de facto un certain niveau d'isolation puisque chaque cluster dispose de sa propre mémoire. Comme précédemment, le chargeur de machine virtuelle (VM Loader) peut être implémenté par du code de sûreté sur le cluster de l'hyperviseur, et/ou par un matériel de type DMA dédié, capable dans les deux cas d'écrire dans la mémoire de n'importe quel cluster/partition pour y charger l'image déchiffrée d'une machine virtuelle (VM). Notons que si le chargeur de machine virtuelle (VM Loader) s'appuie sur le NoC, celui-ci doit être considéré de confiance car des images de machines virtuelles pourront *a priori* y circuler en clair. Dit autrement, il faut garantir (par exemple matériellement) que les autres clusters de la puce ne puissent pas espionner les données y circulant.

Dans cette architecture, les changements de mode depuis/vers Hyperviseur n'ont plus lieu d'être puisqu'un cluster est entièrement dédié à l'hypervision ; néanmoins les partitions non-hyperviseur devront pouvoir être interrompues par la partition hyperviseur pour les migrations/chargement de machines virtuelles.

Notons enfin que ce principe peut être généralisé à une implémentation distribuée entre plusieurs machines physiques reliées par un sous-réseau privé ; une fois encore, ceci peut être envisagé sous l'hypothèse que les nœuds du sous-réseau ne sont pas en mesure d'épier les trames circulant sur celui-ci (images « en clair » issues du chargeur de machine virtuelle).

## Revendications

1. Système d'exécution de code avec mécanisme d'hypervision en aveugle, ledit système comprenant
- au moins une mémoire physique adressable (203) ;
- un processeur (200) fonctionnant dans au moins deux modes, un mode dit d'initialisation permettant de définir au moins une partition dans la mémoire et au moins un deuxième mode dit nominal ;
- un bus mémoire (204) reliant le processeur à la mémoire ;
- une unité de partitionnement mémoire (202) positionnée sur le bus mémoire (204), ladite unité étant adaptée pour restreindre l'accès mémoire à la partition en cours d'exécution lorsque le processeur (200) est dans un autre mode que le mode d'initialisation
- une partition mémoire allouée à un hyperviseur et au moins une partition mémoire allouée à au moins une machine virtuelle (VM) ;
- un chargeur de machine virtuelle permettant de charger en mémoire (203) une machine virtuelle en vue de son exécution ;
- dans lequel le processeur (200) comprend un mode hyperviseur (301), l'accès à la mémoire physique étant uniquement possible lorsque le chargeur de machine virtuelle est exécuté ;
- une unité de gestion mémoire MMU (201) et une unité de protection mémoire MPU étant positionnées entre le processeur (200) et l'unité de partitionnement mémoire (202).

2. Système selon l'une des revendications précédentes dans lequel le jeu d'instructions du processeur (200) est adapté de manière que le passage en mode initialisation ne soit pas possible une fois que le mode nominal a été activé.

3. Système selon l'une des revendications précédentes ladite machine virtuelle étant chiffrée et ayant été transmise par un réseau de télécommunications, ledit chargeur de machine virtuelle comprenant une clé numérique lui étant propre et lui permettant de déchiffrer la machine virtuelle.

4. Système selon la revendication 3 dans lequel le chargeur de machine virtuelle est mis en œuvre sous forme matérielle à l'aide d'un module en silicium, sa clé cryptographique étant gravée dans le silicium.

5. Système selon l'une des revendications précédentes dans lequel la mémoire physique (203) est partitionnée en une pluralité de zones lorsque le processeur (200) est en mode nominal, ces zones correspondant à :
- une partition dédiée à un hyperviseur, l'unité de partitionnement mémoire assurant que cette partition est la seule accessible lorsque le processeur fonctionne en mode hyperviseur ;
- N≥1 partitions dédiées respectivement à N machines virtuelles, chacune pouvant héberger une seule machine, l'UPM assurant que chacune de ces partitions n'est accessible que dans un mode utilisateur ou un mode superviseur de la machine virtuelle correspondante, ou par le chargeur de machine virtuelle lors du chargement/déchargement de la machine virtuelle.

6. Système selon la revendication 5 dans lequel la mémoire physique (203) comprend une partition en lecture seule non modifiable pour le code d'un chargeur de machine virtuelle.

## Patentansprüche

1. System zum Ausführen von Code mit Blind-Hypervisionsmechanismus, wobei das System Folgendes umfasst:
- mindestens einen adressierbaren physischen Speicher (203);
- einen in mindestens zwei Modi arbeitenden Prozessor (200), einem Initialisierungsmodus genannten Modus, welcher es ermöglicht, mindestens eine Partition in dem Speicher zu definieren und mindestens einem zweiten, Nennmodus genanntem Modus;
- einen Speicherbus (204), welcher den Prozessor mit dem Speicher verbindet;
- eine Speicherpartitionierungseinheit (202), welche an dem Speicherbus (204) positioniert ist, wobei die Einheit geeignet ist, den Speicherzugriff auf die in Ausführung befindliche Partition zu beschränken, wenn der Prozessor (200) in einem anderen Modus als dem Initialisierungsmodus ist;
- eine einem Hypervisor zugewiesene Speicherpartition und mindestens eine mindestens einer virtuellen Maschine (VM) zugewiesene Speicherpartition;
- einen Lader für eine virtuelle Maschine, welcher es ermöglicht, eine virtuelle Maschine zwecks ihrer Ausführung in den Speicher (203) zu laden;
- wobei der Prozessor (200) einen Hypervisormodus (301) umfasst, wobei der Zugriff auf den physischen Speicher ausschließlich möglich ist, wenn der Lader für eine virtuelle Maschine ausgeführt wird;
- wobei eine Speicherverwaltungseinheit MMU (201) und eine Speicherschutzeinheit MPU zwischen dem Prozessor (200) und der Speicherpartitionierungseinheit (202) positioniert sind.

2. System nach einem der vorhergehenden Ansprüche, wobei der Anweisungssatz des Prozessors (200) so angepasst ist, dass der Übergang in den Initialisierungsmodus nicht möglich ist, sobald der Nennmodus aktiviert wurde.

3. System nach einem der vorhergehenden Ansprüche, wobei die virtuelle Maschine verschlüsselt ist und durch ein Telekommunikationsnetzwerk übertragen wurde, wobei der Lader für eine virtuelle Maschine seinen eigenen digitalen Schlüssel umfasst, der es ihm ermöglicht, die virtuelle Maschine zu entschlüsseln.

4. System nach Anspruch 3, wobei der Lader für eine virtuelle Maschine als Hardware ausgeführt ist, mithilfe eines Siliziummoduls, wobei sein kryptografischer Schlüssel in das Silizium graviert ist.

5. System nach einem der vorhergehenden Ansprüche, wobei der physische Speicher (203) in eine Vielzahl von Bereichen partitioniert ist, wenn der Prozessor (200) im Nennmodus ist, wobei diese Bereiche Folgendem entsprechen:
- einer einem Hypervisor gewidmeten Partition, wobei die Speicherpartitionierungseinheit sicherstellt, dass diese Partition die einzige zugängliche Partition ist, wenn der Prozessor im Hypervisormodus arbeitet;
- N≥1 Partitionen, welche jeweils N virtuellen Maschinen gewidmet sind, wobei jede eine einzige Maschine hosten kann, wobei die UPM sicherstellt, dass jede dieser Partitionen nur in einem Benutzer- oder einem Supervisormodus der entsprechenden virtuellen Maschine, oder durch den Lader einer virtuellen Maschine beim Laden/Entladen der virtuellen Maschine zugänglich ist.

6. System nach Anspruch 5, wobei der physische Speicher (203) eine unveränderbare Nur-Lese-Partition für den Code eines Laders einer virtuellen Maschine umfasst.

## Claims

1. A system for executing code with blind hypervision mechanism, said system comprising:
- at least one addressable physical memory (203);
- a processor (200) operating in at least two modes, a mode termed initialization making it possible to define at least one partition in the memory and at least one second mode termed nominal;
- a memory bus (204) linking the processor to the memory;
- a memory partitioning unit (202) positioned on the memory bus (204), said unit being adapted for restricting memory access to the partition currently executing when the processor (200) is in a mode other than the initialization mode;
- a memory partition allocated to a hypervisor and at least one memory partition allocated to at least one virtual machine (VM);
- a virtual machine loader making it possible to load into memory (203) a virtual machine with a view to its execution;
- in which the processor (200) comprises a hypervisor mode (301), access to the physical memory only being possible when the virtual machine loader is executed;
- a memory management unit MMU (201) and a memory protection unit MPU being positioned between the processor (200) and the memory partitioning unit (202).

2. The system as claimed in one of the preceding claims, in which the instruction set of the processor (200) is adapted in such a way that the switch to initialization mode is not possible once the nominal mode has been activated.

3. The system as claimed in one of the preceding claims, said virtual machine being enciphered and having been transmitted by a telecommunications network, said virtual machine loader comprising its own digital key allowing it to decipher the virtual machine.

4. The system as claimed in claim 3, in which the virtual machine loader is implemented in hardware form with the aid of a silicon module, its cryptographic key being etched into the silicon.

5. The system as claimed in one of the preceding claims, in which the physical memory (203) is partitioned into a plurality of areas when the processor (200) is in nominal mode, these areas corresponding to:
- a partition dedicated to a hypervisor, the memory partitioning unit ensuring that this partition is the only one accessible when the processor is operating in hypervisor mode;
- N≥1 partitions dedicated respectively to N virtual machines, each being able to host a single machine, the UPM ensuring that each of these partitions is accessible only in a user mode or a supervisor mode of the corresponding virtual machine, or by the virtual machine loader during loading/unloading of the virtual machine.

6. The system as claimed in claim 5, in which the physical memory (203) comprises a non-changeable read-only partition for the code of a virtual machine loader.
